Europäisches Patentamt

European Patent Office

Office européen des brevets

(11) Veröffentlichungsnummer: **0 456 246 A2**

## EUROPÄISCHE PATENTANMELDUNG

(21) Anmeldenummer: 91107584.4

(22) Anmeldetag: 10.05.91

(51) Int. Cl.5: **B29B 9/06**, B29B 9/10, B29B 13/06

(30) Priorität: 10.05.90 DE 4014974

(43) Veröffentlichungstag der Anmeldung:
13.11.91 Patentblatt 91/46

(84) Benannte Vertragsstaaten:
AT BE CH DE DK ES FR GB GR IT LI LU NL SE

(71) Anmelder: BOEHRINGER INGELHEIM KG

W-6507 Ingelheim am Rhein(DE)

(84) BE CH DE DK ES FR GR IT LI LU NL SE AT

Anmelder: BOEHRINGER INGELHEIM INTERNATIONAL G.M.B.H.

W-6507 Ingelheim am Rhein(DE)

(84) GB

(72) Erfinder: Bendix, Dieter, Dr.
Veith-Stoss-Strasse 17
W-6507 Ingelheim am Rhein(DE)
Erfinder: Buchholz, Berthold, Dr.
Grundstrasse 55
W-6507 Ingelheim am Rhein(DE)
Erfinder: Entenmann, Günter, Dr.
Schützenpfad 16
W-6507 Ingelheim am Rhein(DE)

(54) Verfahren zur Herstellung von lösungsmittel- und restmonomerenfreien in Spritzgiess-, Extrusions- und Schmelzspinnverfahren einsetzbaren Polymeren.

(57) Die vorliegende Erfindung betrifft ein Verfahren zur Herstellung lösungsmittel- und restmonomerenfreier in Spritzgieß-, Extrusions- und Schmelzspinnverfahren einsetzbarer Polymere.

EP 0 456 246 A2

Die vorliegende Erfindung betrifft ein Verfahren zur Herstellung von resorbierbaren Polyestern auf der Basis von α-Hydroxycarbonsäuren - insbesondere Milchsäure und Glycolsäure - und/oder Laktonen sowie Laktid und Glycolid, die praktisch keine Restmonomeren enthalten und nicht durch Lösungsmittelrückstände verunreinigt sind und die in einer für die Verwendung in Spritzguß- oder Extrusionsverfahren bzw. eine für das Schmelzspinnen geeigneten Form vorliegen.

Im menschlichen oder tierischen Körper abbaubare Polymere haben in den vergangenen Jahren in zunehmendem Maße an Bedeutung gewonnen.

Neben der Verwendung als Nahtmaterial sind im Laufe der Zeit zahlreiche weitere wichtige Einsatzgebiete dieser resorbierbaren Polymere in den Vordergrund getreten. Dazu gehören beispielsweise deren Verwendung als chirurgische Befestigungselemente - wie z.B. Klammern oder Clipse - oder als Osteosynthese-Hilfsmittel - wie z.B. Knochenschienen - oder als Formkörper zur Abgabe von pharmazeutischen Wirkstoffen - wie z.B. Boli.

Für die Herstellung des Nahtmaterials bzw. der jeweiligen Befestigungselemente bzw. Formkörper kommen Verfahren wie Schmelzspinnen sowie Extrusions- und Spritzgußverfahren zur Anwendung.

Die Verwendung der oben genannten Polymerisate in derartigen Verfahren stellt jedoch gewisse Anforderungen an die Form, in welcher der gewünschte Polyester nach der Polymerisationsreaktion anfällt. Aus physiologischen Gründen ist es weiterhin erforderlich, ein von Lösungsmitteln freies Polymer einzusetzen.

Die nach dem Stand der Technik hergestellten resorbierbaren Polymeren erfüllen diese Anforderungen nur unvollkommen:
So führt z.B. die Polymerisation in Lösung - wobei das Polymerisat anschließend mittels eines Nichtlösers ausgefällt wird - zu einem faser- bzw. watteartigen Produkt, welches für eine Verarbeitung in Spritzguß- oder Extrusionsverfahren ungeeignet ist.

Auf der anderen Seite liefert die sogenannte Emulsionspolymerisation ein gut zu verarbeitendes Polymerisat, jedoch enthält dieses unerwünschte Begleitstoffe, wie Lösungsmittel oder Emulgatoren sowie Restmonomere.

Die Polymerisation in der Schmelze führt schließlich - nach dem Abkühlen und Zerkleinern der Schmelze oder Austrag der Schmelze als Strang - zu einem ebenfalls gut zu verarbeitenden Polymerisat, das jedoch ebenfalls noch Restmonomere enthält.

Der Gehalt an Restmonomeren beeinflußt in nachteiliger Weise die thermische Stabilität, die Lagerstabilität und das Abbauverhalten des Formkörpers. Das jeweilige Polymer muß daher auf dem Wege der Umfällung oder der Extraktion von Restmonomeren befreit werden.

Nach der Umfällung erhält man jedoch ein schwer zu verarbeitendes Produkt faser- oder watteartiger Struktur, welches zudem noch Restlösungsmittel enthält.

Bei der Reinigung mittels Extraktion unter Zuhilfenahme organischer Lösungsmittel erhält man zwar ein gut zu verarbeitendes Polymer, das jedoch noch schwer zu entfernende Restmengen an Extraktionsmittel enthält.

Es ist daher die Aufgabe der vorliegenden Erfindung ein bio-resorbierbares Polymer zur Verfügung zu stellen, das eine für Spritzguß-, Extrusions- und Schmelzspinnverfahren geeignete rieselfähige Form besitzt und welches praktisch frei von Lösungsmittelresten sowie Restmonomeren ist.

Erfindungsgemäß wird die Aufgabe dadurch gelöst, daß ein von Restmonomeren und organischen Lösungsmitteln - in an sich bekannter Weise - durch Umfällen aus einer Mischung aus Aceton und Wasser befreites Polymer, welches Faserstruktur besitzt, entweder

a) in einer Presse unter definierten Bedingungen verpreßt und anschließend granuliert wird
oder

b) in einem Extruder aufgeschmolzen, zu einem Strang gegossen und nach dem Abkühlen granuliert wird.

In einer weiteren Ausführungsform der Erfindung wird ein in der Schmelze hergestelltes bioabbaubares Polymer, das verfahrensbedingt bis zu 20 % Restmonomere enthalten kann, in an sich bekannter Weise auf eine für die Spritzgußverarbeitung geeignete Korngröße zerkleinert und durch Extraktion mit überkritischem Kohlendioxid, vom Restmonomeren befreit.

**Patentansprüche**

1. Verfahren zur Herstellung lösungsmittel- und restmonomerenfreier bioresorbierbarer Polymere, die in Spritzgieß-, Extrusions- oder Schmelzspinnverfahren einsetzbar sind, dadurch gekennzeichnet, daß man ein von Restmonomeren und organischen Lösungsmitteln befreites Polymer in einer Presse verpreßt und anschließend granuliert.

2. Verfahren zur Herstellung lösungsmittel- und restmonomerenfreier bioresorbierbarer Polymere, die in Spritzgieß-, Extrusions- oder Schmelzspinnverfahren einsetzbar sind, dadurch gekennzeichnet, daß man ein von Restmonomeren und organischen Lösungsmitteln befreites Polymer in einem Extruder aufschmilzt, zu einem Strang gießt und anschließend granuliert.

3. Verfahren zur Herstellung lösungsmittel- und restmonomerenfreier bioresorbierbarer Polymere, die in Spritzgieß-, Extrusions- oder Schmelzspinnverfahren einsetzbar sind, dadurch gekennzeichnet, daß ein in der Schmelze hergestelltes Polymerisat auf eine geeignete Korngröße zerkleinert und anschließend mit überkritischem Kohlendioxid extrahiert wird.